(19) Europäisches Patentamt
European Patent Office
Office européen des brevets

(11) Veröffentlichungsnummer: **0 141 173**
**B1**

# (12) EUROPÄISCHE PATENTSCHRIFT

(45) Veröffentlichungstag der Patentschrift: **09.12.87**

(51) Int. Cl.⁴: **C 09 C 1/00**

(21) Anmeldenummer: **84110723.8**

(22) Anmeldetag: **08.09.84**

(54) **Dispergierbares Berliner Blau-Pigment.**

(30) Priorität: **24.09.83 DE 3334596**

(43) Veröffentlichungstag der Anmeldung:
**15.05.85 Patentblatt 85/20**

(45) Bekanntmachung des Hinweises auf die Patenterteilung:
**09.12.87 Patentblatt 87/50**

(84) Benannte Vertragsstaaten:
**BE CH DE FR GB IT LI NL**

(56) Entgegenhaltungen:
**FR - A - 1 270 320**
**FR - A - 2 291 258**
**GB - A - 2 070 636**

(73) Patentinhaber: **Merck Patent Gesellschaft mit beschränkter Haftung, Frankfurter Strasse 250, D-6100 Darmstadt (DE)**

(72) Erfinder: **Rau, Axel, Dr., Hans-Thoma-Strasse 8, D-7798 Pfullendorf (DE)**
Erfinder: **Franz, Klaus-Dieter, Dr., Insterburgerstrasse 12, D-6233 Kelkheim (DE)**

EP 0 141 173 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein dispergierbares Berliner Blau-Pigment, wobei Berliner Blau auf Glimmerplättchen abgeschieden ist.

Es ist bekannt, dass die schlechte Dispergierbarkeit von pulverförmigen Berliner Blau-Pigmenten dadurch verbessert werden kann, dass man das Berliner Blau-Pigment in dünner Schicht auf Glimmerplättchen fixiert. Solche Pigmente, die z.B. in den Patenten DE 2 313 332, US 4 047 969 und US 4 309 480 beschrieben sind, bestehen aus Glimmerplättchen, die mit unlöslichem Berliner Blau beschichtet sind. Durch Fixierung der Pigmentteilchen auf der Glimmeroberfläche wird deren Zusammenlagerung zu grösseren Aggregaten, die bei der Dispergierung wieder zerlegt werden müssten, vermieden. Tatsächlich lassen sich solche Pigmente gut in Wasser dispergieren. Die Dispergierbarkeit in organischen Medien ist jedoch nach wie vor nicht zufriedenstellend.

Es bestand deshalb die Aufgabe, Berliner Blau-Pigmente zu finden, die nicht nur in wässerigen, sondern auch in organischen Formulierungen gut dispergiert werden können.

Diese Aufgabe wurde dadurch gelöst, dass die bekannten Pigmente mit einer in zwei Stufen aufgebrachten Nachbeschichtung belegt werden, wodurch eine teilweise Hydrophobierung erreicht wird.

Gegenstand der Erfindung ist daher ein dispergierbares Berliner Blau-Pigment, wobei Berliner Blau auf Glimmerplättchen abgeschieden ist, das dadurch gekennzeichnet ist, dass das Pigment zusätzlich mit einer ersten Schicht von basischem Aluminiumsulfat und einer zweiten Schicht einer Mischung eines Metallhydroxids mit einem Polysiloxan oder einer Fettsäure beschichtet ist.

Gegenstand der Erfindung ist auch ein Verfahren zur Herstellung eines dispergierbaren Berliner Blau-Pigments, wobei Glimmer in wässeriger Suspension mit der Lösung eines Cyanoferrats und eines Eisensalzes versetzt und danach gegebenenfalls oxidiert wird und das so erhaltene mit Berliner Blau beschichtete Glimmerpigment abgetrennt, gewaschen und getrocknet wird, das dadurch gekennzeichnet ist, dass nach der Beschichtung mit Berliner Blau die Suspension zunächst mit einem Aluminiumsalz, einem Sulfat und einer Base und danach gleichzeitig mit der Lösung eines ein schwer lösliches Hydroxid bildenden Metallsalzes und der Lösung eines Polysiloxans oder der Lösung eines Alkalisalzes einer Fettsäure versetzt wird und das Pigment danach abgetrennt, gewaschen und getrocknet wird.

Schliesslich ist Gegenstand der Erfindung auch die Verwendung eines solchen Pigments bei der Herstellung von organische Medien enthaltenden Zubereitungen.

Überraschenderweise muss durch die erfindungsgemässe Verbesserung der Dispergierbarkeit in organischen Medien keine Verschlechterung der Dispergierbarkeit in wässerigen Formulierungen in Kauf genommen werden. Weiterhin wird überraschenderweise festgestellt, dass die Pigmente durch die erfindungsgemässe Nachbeschichtung eine intensivere Körperfarbe erhalten.

Die Herstellung der erfindunggemässen Pigmente orientiert sich an den z.B. in DE 2 313 332, US 4 047 969 und US 4 309 480 beschriebenen bekannten Verfahren. Dabei werden Glimmerplättchen einer Grösse von etwa 1 bis 200 µm und einer Dicke von etwa 0,1 bis 5 µm in Wasser suspendiert und bei einem geeigneten pH-Wert etwa zwischen 3 und 9 nacheinander oder gleichzeitig mit einer Eisensalzlösung und einer Hexacyanoferratlösung versetzt. Dabei kann zunächst eine Schicht eines schwer löslichen Eisen(II)- oder Eisen(III)-Salzes bzw. Oxidhydrats abgeschieden werden, die dann mit einem Hexacyanoferrat(II) oder Hexacyanoferrat(III) direkt zu Berliner Blau oder zunächst zum farblosen Eisen(II)-Hexacyanoferrat(II) umgesetzt wird, das dann zu Berliner Blau oxidiert wird. Es kann aber durch gleichzeitige Zugabe des Eisensalzes und der Hexacyanoferrat-Lösung auch direkt die Abscheidung von Berliner Blau bzw. Eisen(II)-Hexacyanoferrat(II) erfolgen, wobei sich im letzteren Fall wieder eine Oxidation zum Berliner Blau anschliesst. Die Fällung kann gegebenenfalls mit einem Überschuss von Eisensalz entsprechend US 4 047 969 oder auch in Gegenwart eines Aluminiumsalzes entsprechend US 4 309 480 erfolgen. Anstelle von Glimmer als Ausgangsmaterial können auch mit Metalloxiden, insbesondere $TiO_2$, überzogene Glimmerplättchen eingesetzt werden. Alle diese Verfahren sind in den genannten Patenten und der darin zitierten Literatur beschrieben und werden im erfindungsgemässen Verfahren in gleicher Weise verwendet. Die dabei erhaltenen Pigmente haben in der Regel einen Gehalt an Berliner Blau von etwa 4 bis 50, vorzugsweise etwa 20 bis 40 Gew.-%.

Nach dem erfindungsgemässen Verfahren werden diese Pigmente zunächst mit einer dünnen Schicht von basischem Aluminiumsulfat überzogen. Dazu wird die Pigmentsuspension auf einen pH-Wert von etwa 3 bis etwa 8 eingestellt und mit der Lösung eines Aluminiumsalzes und der Lösung eines Sulfats versetzt, wobei durch Zugabe einer Base der pH-Wert der Suspension konstant gehalten wird. Eine bevorzugte Verfahrensweise, bei der eine besonders homogene Fällung erzielt wird, besteht darin, dass man das Aluminiumsalz und das Sulfat der sauren Pigmentsuspension zugibt, wobei noch keine Ausfällung erfolgt und dass man die Fällung durch Zugabe von Harnstoff und dessen Hydrolyse bei erhöhter Temperatur induziert. Auf diese Weise werden etwa 0,01 bis 2, vorzugsweise etwa 0,1 bis 1 Gew.-% an basischem Aluminiumsulfat, bezogen auf das darin enthaltene Aluminium und bezogen auf das gesamte Pigmentgewicht, aufgebracht.

Die Beschichtung mit dem basischen Aluminiumsulfat allein bringt bereits eine wesentliche Verbesserung der Dispergierbarkeit. Ein zusätzlicher Effekt kann jedoch noch durch eine Zweitbeschichtung mit einem Polysiloxan und einem Metallhydroxid oder einer Fettsäure und einem Metallhydroxid erzielt werden.

Zur Beschichtung mit dem Polysiloxan und einem Metallhydroxid wird die Pigmentsuspension auf einen pH-Wert von etwa 2 bis etwa 7 eingestellt und mit der Lösung eines Polysiloxans und der Lösung eines ein schwerlösliches Hydroxid bildenden Metallsalzes versetzt. Als Polysiloxane werden insbesondere Polyorganosiloxane eingesetzt, wie z.B. Polyethersiloxane. Dies sind Blockcopolymere, die aus einem linearen oder verzweigten Polysiloxanblock, z.B. einem Polydimethylsiloxan, und einem oder mehreren Polyetherblöcken aufgebaut sind.

Polysiloxane im Sinne dieser Anmeldung sind demgemäss verzweigte Blockcopolymere bestehend aus Polysiloxansegmenten des Typs

$$\begin{array}{c} R^2 \\ | \\ R^1\text{-O-Si-O-}R^3 \\ | \\ R^4 \end{array}$$

wobei $R^1$ und $R^3$ gleich $\begin{array}{c} R^2 \\ | \\ \text{-Si-O}R^3 \\ | \\ R^4 \end{array}$, H, Alkyl oder Polyether und $R^2$ und $R_4$ gleich $\begin{array}{c} R^2 \\ | \\ \text{-Si-O}R^3 \\ | \\ R^4 \end{array}$, Alkyl oder Polyether bedeutet. Die Polymere haben eine Viskosität von etwa 20 - 20.000 $mm^2 \cdot sec^{-1}$ bei 25°C, Molekulargewichte von etwa 500 bis 5000 und sind aufgrund des Verhältnisses von verzweigten zu unverzweigten Alkylketten in den Polyethersequenzen von beispielsweise 50% Ethylenoxid zu 50% Propylenoxid wasser- und öllöslich. Durch Erhöhung der Temperatur oder durch Einstellung eines sauren oder stark alkalischen Milieus können sie leicht aus wässeriger Lösung durch partielle Hydrolyse ausgefällt werden.

Die kammartig an dem Polysiloxangerüst angebrachten Polyetherseitenketten werden unter den Reaktionsbedingungen zumindest teilweise hydrolytisch abgespalten, wodurch an dem Polysiloxangerüst Koordinationsstellen für das mitgefällte Metallhydroxid frei werden.

Das Polysiloxan wird in einer etwa 2 bis etwa 20 Gew.-%igen Lösung bzw. Emulsion eingesetzt. Die Menge der zu der Pigmentsuspension zugegebenen Lösung wird so bemessen, dass das in der Lösung enthaltene Polysiloxan etwa 0,1 bis etwa 40 Gew.-% des Pigments ausmacht. Dabei ist zu beachten, dass nicht die gesamte Siloxanmenge auf dem Pigment abgeschieden wird, sondern ein Teil in Lösung verbleibt. Im beschichteten Pigment finden sich daher in der Regel etwa 0,01 bis etwa 5, insbesondere etwa 0,1 bis 2 Gew.-%, bezogen auf $SiO_2$ und bezogen auf das gesamte Pigmentgewicht.

Als gleichzeitig zu fällende Metallhydroxide kommen die Hydroxide der Erdalkalimetalle, von Aluminium, Zinn, Zink, Eisen, Kobalt und Chrom in Frage. Bevorzugt werden insbesondere Aluminium und Zink. Wesentlich ist, dass die Lösung der Metallsalze, die diese Hydroxide bilden, gleichzeitig mit der Polysiloxan-Lösung der Pigmentsuspension zugegeben wird, damit eine homogene Mischung erfolgen kann. Die Metallhydroxide werden in der Regel in Mengen von etwa 0,1 bis 5 Gew.-%, vorzugsweise von etwa 0,5 bis 3 Gew.-% aufgefällt.

Falls als zweite Nachbeschichtung eine Beschichtung mit Fettäure plus Metallhydroxid erfolgt wird die Pigmentsuspension auf einen pH-Wert von etwa 3 bis etwa 7 eingestellt und mit der Lösung eines Alkalisalzes einer Fettsäure, insbesondere einer einbasischen, gesättigten oder ungesättigten Carbonsäure mit 4 bis 30, vorzugsweise 10 bis 20 C-Atomen versetzt. Die etwa 0,5 bis etwa 5 Gew.-%ige Lösung wird in einer solchen Menge zugegeben, dass sich ein Gehalt von etwa 0,01 bis 2, vorzugsweise von etwa 0,1 bis 1 Gew.-% der jeweiligen Fettsäure im fertigen Pigment ergibt.

Zusammen mit der Fettsäure wird auch hier ein Metallhydroxid zur Ausfällung gebracht, wobei ebenfalls wesentlich ist, dass die Zugabe der Fettsäure und des ein schwerlösliches Hydroxid bildenden Metallsalzes gleichzeitig erfolgt. Auf der Pigmentoberfläche kommt es dabei hauptsächlich zur Bildung der entsprechenden Metallseifen. Art und Menge der Metallhydroxide werden in gleicher Weise gewählt wie bei der Siloxannachbeschichtung. Bei relativ hohen Gehalten an basischem Aluminiumsulfat und an Metallhydroxid plus Fettsäure ergibt sich ein weiterer überraschender Vorteil der erfindungsgemässen Pigmente. Es ist nämlich bekannt, dass bei Berliner Blau-Pigmenten eine Abhängigkeit der Körperfarbe vom Restwassergehalt der Probe besteht. Dies macht sich dadurch bemerkbar, dass mit zunehmender Trocknungsdauer sowohl eine Farbverschiebung ins Rotstichige als auch eine Abnahme der Helligkeit eintritt.

Es wurde nun gefunden, dass dieser Effekt deutlich verringert werden kann, wenn das Pigment mit einem relativ hohen Gehalt an den Nachbeschichtungen versehen wird. Der Gehalt an basischem Aluminiumsulfat soll dabei etwa 0,5 - 20 Gew.-%, vorzugsweise 5- 10 Gew.-%, bezogen auf das gesamte Pigmentgewicht, betragen. Das für die zweite Nachbeschichtung verwendete Metallhydroxid wird zur Erreichung dieses Effekts in Mengen von etwa 0,1 - 5 Gew.-%, vorzugsweise etwa 0,5 - 2 Gew.-%, jeweils bezogen auf das Gesamtgewicht des fertigen Pigments, aufgefällt.

Nach Beendigung der Beschichtungen wird jeweils die Pigmentsuspension gegebenenfalls noch einige Zeit nachgerührt und es werden die Pigmente dann auf übliche Weise abgetrennt, gegebenenfalls noch gewaschen und getrocknet. Die Pigmente können danach für alle Verwendungszwecke eingesetzt werden, wie z.B. in der Kosmetik, aber auch bei der Pigmentierung von Kunststoffen, Lacken und Farben. Aufgrund der deutlich verbesserten Dispergierbarkeit in organischen Medien ist auch die Verwendung in solche Medien enthaltenden Zubereitungen bevorzugt.

*Beispiel 1*

Zu einer Suspension von 160 g Glimmer mit einer Teilchengrösse von etwa 1 bis 15 µm in 2240 ml Wasser werden bei 70°C und einem pH-Wert von 5,0 innerhalb von 270 Minuten gleichzeitig eine Lösung von 80 g $FeSO_4 \times 7\ H_2O$ und 3,2 ml konzentrierter Schwefelsäure in 800 ml Wasser und eine Lösung von 107,4 g $K_4[Fe(CN)_6] \times 3\ H_2O$ in 800 ml Wasser gegeben, wobei der pH-Wert der Suspension durch gleichzeitige Zugabe einer 5%igen Natronlauge weitgehend konstant gehalten wird. Danach wird mit 10%iger Salzsäure ein pH-Wert von 3,0 eingestellt und durch Zugabe von 4,2 g $KClO_3$ 105 Minuten bei 70°C oxidiert.

Zu der so erhaltenen Suspension eines Berliner Blau-Pigments gibt man 28,8 g Harnstoff, 6,4 g $AlCl_3 \times 6\ H_2O$, 38,4 g $NH_4Cl$ und 3,2 g $(NH_4)_2SO_4$ und erhitzt für 2,5 Stunden auf 97°C. Nach Abkühlen auf 60°C wird mit konzentrierter Salzsäure ein pH-Wert von 5,0 eingestellt und es wird innerhalb von 21 Minuten eine Lösung von 20 g Polysiloxanpolyethercopolymer (Siloxan Tego® 281 der Fa. Goldschmidt AG) in 200 ml Wasser und eine Lösung von 5,6 g $AlCl_3 \times 6\ H_2O$ in 200 ml Wasser gleichzeitig zugegeben, wobei der pH-Wert durch Zugabe einer 1%igen Natronlauge weitgehend konstant gehalten wird. Nach 3stündigem Nachrühren wird das Produkt abgetrennt, mit Wasser gewaschen und bei 120°C getrocknet.

*Beispiel 2*

Eine Suspension von 105 g eines nach Beispiel 4 des US-Patents 4 309 480 hergestellten Pigments mit einer Teilchengrösse von 1 bis 15 µm und einem Gehalt an Berliner Blau von 5,7 Gew.-% in 900 ml Wasser wird analog Beispiel 1 unter Einsatz von 18 g Harnstoff, 4 g $AlCl_3 \times 6\ H_2O$, 24 g $NH_4Cl$ und 2 g $(NH_4)_2SO_4$ mit basischem Aluminiumsulfat beschichtet.

Nach Abkühlen auf 60°C wird der pH-Wert der Suspension mit konzentrierter Salzsäure auf 5,0 eingestellt, und es wird innerhalb von 27 Minuten eine Lösung von 4 g Siloxan Tego 281 und 4,75 g $AlCl_3 \times 6\ H_2O$ in 250 ml Wasser zugetropft, wobei der pH-Wert durch gleichzeitige Zugabe von 1%iger Natronlauge weitgehend konstant gehalten wird. Nach 1,5stündigem Nachrühren wird abgetrennt, mit 8 l Wasser gewaschen und bei 120°C getrocknet.

*Beispiel 3*

Eine Suspension von 50 g eines nach Beispiel 8 der DOS 2 313 332 hergestellten Berliner Blau-Pigments mit einer Teilchengrösse von 1 bis 15 µm und einem Gehalt an Berliner Blau von etwa 31 Gew.-% in 600 ml Wasser wird analog Beispiel 1 unter Einsatz von 9 g Harnstoff, 2 g $AlCl_3 \times 6\ H_2O$, 12 g $NH_4Cl$ und 1 g $(NH_4)_2SO_4$ mit basischem Aluminiumsulfat beschichtet.

Nach Abkühlen auf 60°C wird analog Beispiel 2 unter Einsatz von 2 g Siloxan Tego 281 und 2,4 g $AlCl_3 \times 6\ H_2O$ nachbeschichtet.

*Beispiel 4*

Eine Suspension von 13 g eines entsprechend Beispiel 1 unter Verwendung von 9 g Glimmer, 4,5 g $FeOS_4 \times 7\ H_2O$, 0,2 ml konzentrierter Schwefelsäure und 6 g $K_4[Fe(CN)_6] \times 3\ H_2O$ hergestellten Berliner Blau-Pigments mit einer Teilchengrösse von 1 bis 15 µm in 200 ml Wasser wird ebenfalls entsprechend Beispiel 1 unter Verwendung von 1,6 g Harnstoff, 0,4 g $AlCl_3 \times 6\ H_2O$, 2,2 g $NH_4Cl$ und 0,2 g $(NH_4)_2SO_4$ mit basischem Aluminiumsulfat beschichtet.

Nach Abkühlen auf 60°C wird der pH-Wert der Suspension mit 2%iger Ammoniaklösung auf 7,0 eingestellt, und es wird innerhalb von 16 Minuten eine Lösung von 0,4 g Siloxan Tego 281 in 50 ml Wasser und eine Lösung von 0,58 g $ZnSO_4 \times 7\ H_2O$ in 50 ml Wasser gleichzeitig zugetropft, wobei der pH-Wert durch gleichzeitige Zugabe von 2%iger Ammoniaklösung weitgehend konstant gehalten wird. Nach 45minütigem Nachrühren wird abgetrennt, gewaschen und bei 120°C getrocknet.

*Beispiel 5*

Eine Suspension von 50 g eines entsprechend Beispiel 1 unter Verwendung von 34,5 g Glimmer, 17,25 g $FeSO_4 \times 7\ H_2O$, 0,7 ml konzentrierter Schwefelsäure und 23,2 g $K_4[Fe(CN)_6] \times 3\ H_2O$ hergestellten Berliner Blau-Pigments mit einer Teilchengrösse von 1 bis 15 µm in 850 ml Wasser wird ebenfalls entsprechend Beispiel 1 unter Verwendung von 6,2 g Harnstoff, 1,4 g $AlCl_3 \times 6\ H_2O$, 8,3 g $NH_4Cl$ und 0,7 g $(NH_4)_2SO_4$ mit basischem Aluminiumsulfat beschichtet. Danach wird der pH-Wert der Suspension mit 10%iger Salzsäure auf 5,0 eingestellt, und es wird innerhalb von 20 Minuten eine Lösung von 1,9 g $AlCl_3 \times 6\ H_2O$ in 100 ml Wasser und eine Lösung von 0,5 g eines Gemisches der Natriumsalze von $C_{14}$- bis $C_{18}$-Fettsäuren (Edenor® SJ der FA. Henkel) in 100 ml Wasser zugetropft, wobei der pH-Wert durch gleichzeitige Zugabe verdünnter Salzsäure weitgehend konstant gehalten wird. Nach 1stündigem Nachrühren wird abgetrennt, gewaschen und bei 120°C getrocknet.

*Beispiel 6*

a) Zu einer Suspension von 750 g Glimmer mit einer Teilchengrösse von etwa 1 - 15 µm in 4,47 l Wasser werden bei Raumtemperatur und einem pH-Wert von 5,0 innerhalb von 12 Stunden gleichzeitig eine Lösung von 140 g $FeCl_3 \times 6\ H_2O$ in 3720 ml und eine Lösung von 218,8 g $K_4[Fe(CN)_6)] \times 3\ H_2O$ in 3720 ml Wasser gegeben, wobei der pH-Wert der Suspension durch gleichzeitige Zugabe einer 2%igen Ammoniaklösung weitgehend konstant gehalten wird.

b) Zu 1444 ml einer so erhaltenen Suspension eines Berliner Blau-Pigments (enthält 100 g Pigment) gibt man 600 ml Wasser, 36 g Harnstoff, 48,2 g $NH_4Cl$, 1,8 g $(NH_4)_2SO_4$ und erhitzt auf 98°C. Bei dieser Temperatur wird dann eine Lösung von 8 g $AlCl_3 \times 6\ H_2O$ in 300 ml Wasser so zudosiert, das der pH-Wert nicht unter 5,0 sinkt. Nach Abkühlen auf 70°C wird ein pH-Wert von 5,0 eingestellt und innerhalb von 90 min gleichzeitig eine Lösung von 1,4 g Natriumstearat in 300 ml Wasser sowie 6 g $AlCl_3 \times H_2O$ in 300 ml Wasser zudosiert, wobei durch Zugabe einer verdünnten Ammoniaklösung der pH-Wert weitgehend konstant gehalten wurde. Nach einstündigem Nachrühren wird das Produkt abgetrennt, mit Wasser gewaschen und bei 110°C getrocknet.

*Vergleichsbeispiel*

Ein nach Beispiel 6a) hergestelltes Berliner Blau-Pigment wurde ohne weitere Nachbeschichtung abgetrennt, mit Wasser gewaschen und bei 110°C getrocknet.

Im Vergleich zu diesem Pigment zeigt ein nach Beispiel 6b) nachbeschichtetes Pigment eine verbesserte Dispergierbarkeit und beim Aufbringen auf die

Haut ein weicheres Feeling. Darüberhinaus zeigen die Farbwerte der nachbeschichteten Probe gegenüber dem unbeschichteten Pigment, gemessen mit einem Farbmessgerät (modifiziertes Farbmessgerät D25D9 der Firma Hunterlab, Fairfax, Virginia, USA) an den Pulvern, die höhere Farbstärke des nachbeschichteten Pigments sowie die geringere Abnahme der Helligkeit dieser Probe während des Trocknens.

In der folgende Tabelle sind die L, a, b-Werte in Abhängigkeit von der Trocknungszeit bei 110°C aufgeführt.

| Trocknungszeit | Pigment ohne Nachbeschichtung | | | Pigment mit Nachbeschichtung | | |
|---|---|---|---|---|---|---|
| | L | a | b | L | a | b |
| 3 Stunden | 23,9 | +3,8 | -19,0 | 18,0 | +5,8 | -21,3 |
| 15 Stunden | 22,0 | +4,1 | -16,6 | 18,4 | +5,4 | -20,2 |
| 56 Stunden | 21,0 | +3,9 | -13,1 | 17,5 | +6,1 | -17,7 |

**Patentansprüche**

1. Dispergierbares Berliner Blau-Pigment, wobei Berliner Blau auf Glimmerplättchen abgeschieden ist, dadurch gekennzeichnet, dass das Pigment zusätzlich mit einer ersten Schicht von basischem Aluminiumsulfat und einer zweiten Schicht einer Mischung eines Metallhydroxids mit einem Polysiloxan oder einer Fettsäure beschichtet ist.

2. Pigment nach Anspruch 1, dadurch gekennzeichnet, dass als Metallhydroxid Aluminium oder Zinkhydroxid enthalten ist.

3. Pigment nach Anspruch 1 oder 2, dadurch gekennzeichnet, dass das basische Aluminiumsulfat in einer Menge von 0,01 bis 2 Gew.-%, das Metallhydroxid in einer Menge von 0,1 bis 5 Gew.-%, das Polysiloxan ggf. in einer Menge von 0,01 bis 5 Gew.-% und die Fettsäure ggf. in einer Menge von 0,01 bis 2 Gew.-%, jeweils bezogen auf das Gesamtgewicht des fertigen Pigments, enthalten ist.

4. Pigment nach einem der Ansprüche 1 bis 3, dadurch gekennzeichnet, dass als Fettsäure eine einbasische Fettsäure mit 10 bis 20 Kohlenstoffatomen enthalten ist.

5. Verfahren zur Herstellung eines dispergierbaren Berliner Blau-Pigments, wobei Glimmer in wässeriger Suspension mit der Lösung eines Cyanoferrats und eines Eisensalzes versetzt und danach gegebenenfalls oxidiert wird und das so erhaltene mit Berliner Blau beschichtete Glimmerpigment abgetrennt, gewaschen und getrocknet wird, dadurch gekennzeichnet, dass nach der Beschichtung mit Berliner Blau die Suspension zunächst mit einem Aluminiumsalz, einem Sulfat und einer Base und danach gleichzeitig mit der Lösung eines ein schwerlösliches Hydroxid bildenden Metallsalzes und der Lösung eines Polysiloxans oder der Lösung eines Alkalisalzes einer Fettsäure versetzt wird und das Pigment danach abgetrennt, gewaschen und getrocknet wird.

6. Verfahren nach Anspruch 5, dadurch gekennzeichnet, dass als Base Harnstoff verwendet wird.

7. Verfahren nach Anspruch 5 oder 6, dadurch gekennzeichnet, dass als Metallsalz ein Aluminium- oder Zinksalz verwendet wird.

8. Verfahren nach einem der Ansprüche 5 bis 7, dadurch gekennzeichnet, dass als Fettsäure eine einbasische Carbonsäure mit 10 bis 20 Kohlenstoffatomen verwendet wird.

9. Verwendung des Pigments nach Anspruch 1 bei der Herstellung von organische Medien enthaltenden Zubereitungen.

**Claims**

1. Dispersible Berlin blue pigment wherein the Berlin blue has been deposited on to mica platelets, characterised in that the pigment has been additionally coated with a first coat of basic aluminium sulfate and a second coat of a mixture of a metal hydroxide with a polysiloxane or a fatty acid.

2. Pigment according to claim 1, characterised in that the metal hydroxide is aluminium or zinc hydroxide.

3. Pigment according to claim 1 or 2, characterised in that the basic aluminium sulfate is contained in an amount of from 0.01 to 2% by weight, the metal hydroxide in an amount of from 0.1 to 5% by weight, the polysiloxane, if the occasion arises, in an amount of from 0.01 to 5% by weight, and the fatty acid, if the occasion arises, in an amount of from 0.01 to 2% by weight, each percentage related to the total weight of the ready-to-use pigment.

4. Pigment according to any one of claims 1 to 3, characterised in that the fatty acid is a monobasic fatty acid of 10 to 20 carbon atoms.

5. Process for preparing a dispersible Berlin blue pigment wherein mica in aqueous suspension is treated with a solution of a cyanoferrate and of an iron salt and is then oxidised if necessary, and the resulting mica pigment coated with Berlin blue is separated off, washed and dried, characterised in that after it has been coated with Berlin blue the suspension has added to it first of all an aluminium salt, a sulfate and a base and then, simultaneously, a solution of a metal salt forming a sparingly soluble hydroxide and a solution of a polysiloxane or a solution of an alkali metal salt of a fatty acid, and the pigment is then separated off, washed and dried.

6. Process according to claim 5, characterised in that the base is urea.

7. Process according to claim 5 or 6, characterised in that the metal salt is an aluminium or zinc salt.

8. Process according to any one of claims 5 to 7, characterised in that the fatty acid is a monobasic carboxylic acid of 10 to 20 carbon atoms.

9. Use of the pigment according to claim 1 in the production of preparation containing organic media.

**Revendications**

1. Pigment de bleu de Berlin dispersible, dont le bleu de Berlin est déposé sur des paillettes de mica, caractérisé en ce que le pigment est enduit supplémentairement avec une première couche de sulfate

d'aluminium basique et une deuxième couche d'un mélange d'un hydroxyde métallique avec un polysiloxane ou un acide gras.

2. Pigment selon la revendication 1, caractérisé en ce qu'il contient comme hydroxyde métallique de l'hydroxyde d'aluminium ou de zinc.

3. Pigment selon la revendication 1 ou 2, caractérisé en ce qu'il contient le sulfate d'aluminium basique en une quantité de 0,01 à 2% en poids, l'hydroxyde métallique en une quantité de 0,1 à 5% en poids, le polysiloxane éventuellement en une quantité de 0,01 à 5% en poids et l'acide gras éventuellement en une quantité de 0,01 à 2% en poids, chaque fois par rapport au poids total du pigment terminé.

4. Pigment selon l'une des revendications 1 à 3, caractérisé en ce qu'il contient comme acide gras un acide gras monobasique ayant 10 à 20 atomes de carbone.

5. Procédé de fabrication d'un pigment de bleu de Berlin dispersible, dans lequel on ajoute à du mica en suspension aqueuse la solution d'un cyanoferrate et d'un sel de fer, quel'on oxyde éventuellement par la suite, le pigment de mica ainsi obtenu, qui est enduit de bleu de Berlin, étant séparé, lavé et séché, caractérisé en ce qu'après l'enduction avec le bleu de Berlin on ajoute à la suspension d'abord un sel d'aluminium, un sulfate et une base et ensuite en même temps la solution d'un sel métallique formateur d'un hydroxyde difficilement soluble et la solution d'un polysiloxane ou la solution d'un sel alcalin d'un acide gras, et en ce que par la suite on sépare, lave et sèche le pigment.

6. Procédé selon la revendication 5, caractérisé en ce qu'on utilise comme base de l'urée.

7. Procédé selon la revendication 5 ou 6, caractérisé en ce qu'on utilise comme sel métallique un sel d'aluminium ou de zinc.

8. Procédé selon l'une quelconque des revendications 5 à 7, caractérisé en ce qu'on utilise comme acide gras un acide carboxylique monobasique ayant 10 à 20 atomes de carbone.

9. Utilisation du pigment selon la revendication 1 dans la fabrication de préparations qui contiennent des milieux organiques.